# EUROPEAN PATENT APPLICATION

(11) **EP 4 736 714 A1**
(43) Date of publication of application: **06.05.2026**
(21) Application number: 25212584.4
(22) Date of filing: 31.10.2025
(51) Int. Cl.: A47J 37/06

(54) **COOKING APPARATUS**

(30) Priority: 31.10.2024 IT 202400024534
(71) Applicant: De' Longhi Appliances S.r.l., 31100 Treviso (IT)
(72) Inventor: Freund, Jara, 63263 Neu-Isenburg (DE); Buratto, Alessandro, 31100 Treviso (TV) (IT); Zambon, Mattia, 31100 Treviso (TV) (IT); Mazzon, Renzo, 31100 Treviso (TV) (IT)
(74) Representative: Petraz, Gilberto Luigi

(57) **Abstract**

Cooking apparatus (10), comprising a support body (11) and at least one container (12), in particular a drawer container, insertable into and extractable from a housing space (13).

## Description

### FIELD OF THE INVENTION

The present invention concerns an autonomous apparatus for cooking foodstuffs using hot air, such as for example an air fryer or suchlike.

### BACKGROUND OF THE INVENTION

Autonomous cooking apparatuses, also known as air fryers, which cook foodstuffs by means of a heated air flow, are generally divided into two categories, namely, those provided with a support body and a cover that can be opened and closed with respect to the support body to insert and/or remove a foodstuff container from above, and those provided with a support body into/from which the foodstuff container can be inserted and removed, like a drawer, in a lateral direction.

Generally, cooking apparatuses with a cover are very bulky and require a large free space in height to allow the cover, which is generally hinged to the support body, to rotate, therefore they cannot be positioned and used under kitchen cabinets, but it is necessary to provide a suitable usage zone.

Both categories of apparatuses present problems related to the system for closing the cooking chamber, which has a fixed shape and sizes constrained to the compartment in which it is inserted. This means that, in order to have different cooking methods, accessories are often used that have to be positioned inside the cooking chamber (grills, cake molds, cake tins, etc.). Usually, the compartment in which the cooking chamber is inserted has the function of support, while the purpose of the cooking chamber is to contain the foodstuffs and/or any accessories. The cooking chamber is closed the moment it is inserted in the compartment.

In the case of an apparatus with a cover closure, the cover can be heavy to open, and it is also clearly necessary to provide hinges and other means to move it.

In the case of a drawer apparatus, here too, the drawer's weight can be significant and grasping it with one hand is complicated, while grasping it with two hands is not possible. In addition, the opening and closing of the drawer still requires a certain amount of free space in front of the apparatus.

DE 9213607 U1 describes a known type of cooking apparatus comprising a support body and a container that can be inserted into and removed from a compartment of the support body, wherein the support body comprises a first and a second part hinged to each other, to which a base and a cover are fixed.

There is therefore the need to perfect a cooking apparatus that can overcome at least one of the disadvantages of the state of the art.

In particular, one purpose of the present invention is to provide a cooking apparatus that is efficient, compact, and allows the user to easily insert and remove at least one container that defines at least one cooking chamber.

Another purpose of the present invention is to provide a cooking apparatus in which the space of the support body in which the container is housed is maximized.

Another purpose of the present invention is to provide a cooking apparatus that is versatile and allows to possibly have cooking chambers with different heights.

Another purpose of the present invention is to provide a cooking apparatus that also allows to use different types of cooking containers and accessories, possibly already available to a user.

Another purpose of the present invention is to provide a cooking apparatus that allows to close the cooking chamber effectively and at the same time possibly achieve the more or less wide opening of possible ventilation holes of the cooking chamber, thus allowing for cooking methods with different humidity levels.

One more purpose of the invention is to provide a cooking apparatus that allows to have optimal visibility of the foodstuffs cooking inside it.

The Applicant has devised, tested and embodied the present invention to overcome the shortcomings of the state of the art and to obtain these and other purposes and advantages.

### SUMMARY OF THE INVENTION

The present invention is set forth and characterized in the independent claim. The dependent claims describe other characteristics of the present invention or variants to the main inventive idea.

In accordance with the above purposes, a cooking apparatus according to the present invention comprises a support body and at least one container, in particular a drawer container, insertable and extractable from a housing space of the support body.

According to one aspect of the invention, the support body is provided with a support wall to which a base and a cover are fixed, an annular closing portion being associated with the cover slidable with respect thereto in a substantially vertical direction from at least a first lowered position, in which it is engaged on the upper edge of the at least one container inserted in the housing space and defining at least one cooking chamber, to at least a second raised position of extraction of the at least one container, or vice versa.

The base, cover, and support wall are fixed in position, and the movable annular closing portion advantageously allows the at least one container to be engaged and disengaged, without requiring excessive effort from the user and/or the need to provide means for rotating the cover on the support body.

When the closing portion is in the lowered position, its function is effectively to close the cooking chamber defined by the container and to prevent the same container from being removed from the support body.

The present cooking apparatus proves to be extremely efficient and compact, allowing to easily insert and extract the at least one container, which itself defines the at least one cooking chamber, unlike known solutions in which the container is inserted inside an enclosed space.

In accordance with the invention, the support body substantially defines the upper and lower walls, and at least part of the rear wall of the cooking apparatus, while the lateral walls of the container itself define the lateral walls of the cooking apparatus.

Moreover, the cooking apparatus allows to possibly use containers of different heights, thus obtaining different types of cooking chambers, or even multiple containers at once, and at the very least limits the need to use cooking accessories that are specific to the cooking apparatus.

The present cooking apparatus allows to close the cooking chamber effectively while simultaneously possibly achieving the more or less wide opening of possible ventilation holes of the cooking chamber, thus allowing for cooking methods with different humidity levels.

According to another aspect of the invention, the closing portion internally has a section that tends to widen downwards and to narrow upwards, so as to slightly compress the upper edge of the container in the lowered closing position.

According to another aspect of the invention, the closing portion is associated with a guide device, so as to move with precision relative to the cover.

According to another aspect of the invention, the support body has a substantially C-like shape defined by the cover, the support wall and the base, and delimiting the housing space.

According to another aspect of the invention, the container is made using a transparent material, such as glass or suchlike. With this solution, the cooking chamber defined inside the container is completely visible on at least three of the four sides.

According to another aspect of the invention, the cover is provided with one or more heating devices and/or one or more ventilation devices.

According to another aspect of the invention, the base is provided with one or more heating devices.

According to another aspect of the invention, the base's heating devices are vertically aligned with the cover's heating devices.

According to another aspect of the invention, two or more containers are positioned in the housing space. Preferably, the two containers can be disposed side by side, resting on the base. However, according to one possible variant, it can also be provided that the containers are disposed stacked on top of each other, so that the lower container rests on the base and the upper container cooperates with the closing portion.

According to another aspect of the invention, the at least one container is divided into two parts separated by one or more walls.

According to another aspect of the invention, one or more baskets are housed in the at least one container to facilitate the handling of the container and/or the cooking of the foodstuffs.

### DESCRIPTION OF THE DRAWINGS

These and other aspects, characteristics and advantages of the present invention will become apparent from the following description of some embodiments, given as a non-limiting example with reference to the attached drawings wherein:
- fig. 1 is a front view of a cooking apparatus with the closing portion in a position of retention of a container;
- fig. 2 is a three-dimensional view of the cooking apparatus of fig. 1;
- fig. 3 is a three-dimensional view of the cooking apparatus with the closing portion in a position of release of the container;
- fig. 4 is a three-dimensional view of the cooking apparatus without the container;
- figs. 5a and 5b show a lateral section view of a guide device of a closing portion associated with the cover;
- figs. 6-10 show schematic, front section views of variants of the cooking apparatus.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples.

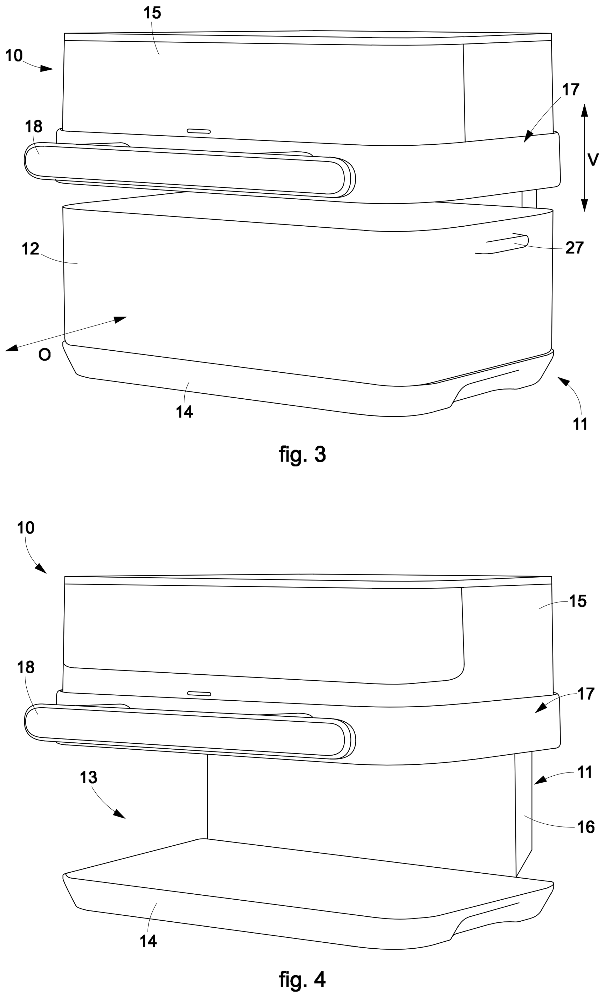

With reference to the attached drawings, see in particular figs. from 1 to 4, a cooking apparatus 10 comprises a support body 11 and a container 12 insertable and extractable like a drawer into/from a housing space 13 (fig. 4).

The support body 11 is provided with a support wall 16 to which a base 14 and a cover 15 are fixed.

The support wall 16 is in particular a rear wall and can be formed by one or more substantially vertical elements.

The support wall 16 can be fixed to respective rear edges of the base 14 and the cover 15.

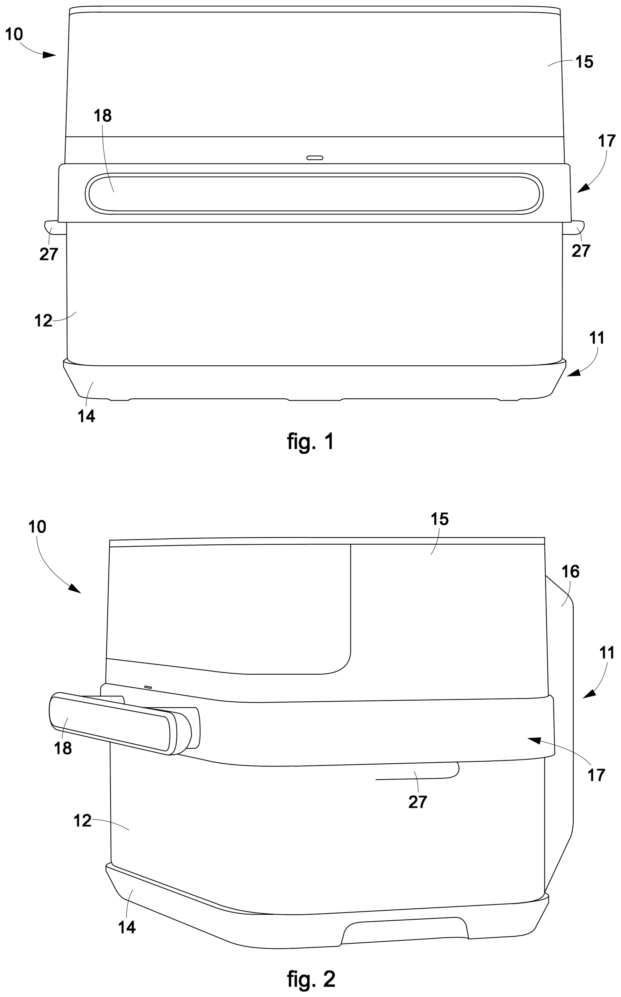

Associated with the cover 15 is an annular closing portion 17, shaped as a belt or suchlike, which is slidable with respect to the cover 15 in a substantially vertical direction V (fig. 3) from at least a first lowered position, figs. 1 and 2, in which it is engaged on the upper edge of the container 12 inserted in the housing space 13 and defining a cooking chamber, to at least a second raised position, fig. 3, of extraction of the container 12, or vice versa.

The container 12 can be inserted into and extracted from the housing space 13 for example in a substantially horizontal direction O, either frontally, laterally or from different angles.

While the base 14, the cover 15 and the support wall 16 are fixed in position, the insertion and extraction of the container 12 are allowed by the sliding of the closing portion 17 with respect to the cover 15.

According to one aspect of the invention, in the first lowered closing position, the closing portion 17 can close the container 12 substantially hermetically.

It is possible to provide that the closing portion 17 internally has a section that tends to widen downwards and to narrow upwards, thus for example with a substantially truncated conical shape or suchlike, so as to slightly compress the upper edge of the container 12 by lowering in the closing position. In this way, the hermetic seal is greater, and hot air is prevented from escaping from the container 12 in unwanted zones.

According to possible variants, as a function of the height and size of the container 12, it can also be provided that a slit is created between the upper edge of the container 12 and the lower edge of the closing portion 17, through which, during use, the flow of cooking air can escape.

Once the container 12 has been completely removed, the support body 11 assumes a substantially C-like shape, as shown in fig. 4, that is, defined by the cover 15, the support wall 16 and the base 14. The cover 15, the support wall 16 and the base 14 delimit the housing space 13.

In particular, the support body 11 limits the housing space 13 on three sides, namely, the upper and lower side and the rear-facing side, leaving the other three sides, namely, the front side and the lateral ones, substantially free and open.

In accordance with one aspect of the invention, the closing portion 17 can comprise, for example at the front, a gripping handle 18 to lift or lower it.

In accordance with another aspect of the invention, the container 12 can comprise gripping handles 27 on opposite sides.

According to one aspect of the invention, inside the housing space 13 it is possible to use either a container 12 having base and height sizes which are correlated to those of the housing space 13, so as to be substantially flush with the base 14 and the cover 15 when inserted therein, or containers 12 with different base and/or height sizes, in particular smaller than those of the housing space 13.

The closing portion 17 can be more or less high as a function of the height of the container 12 inserted in the housing space 13.

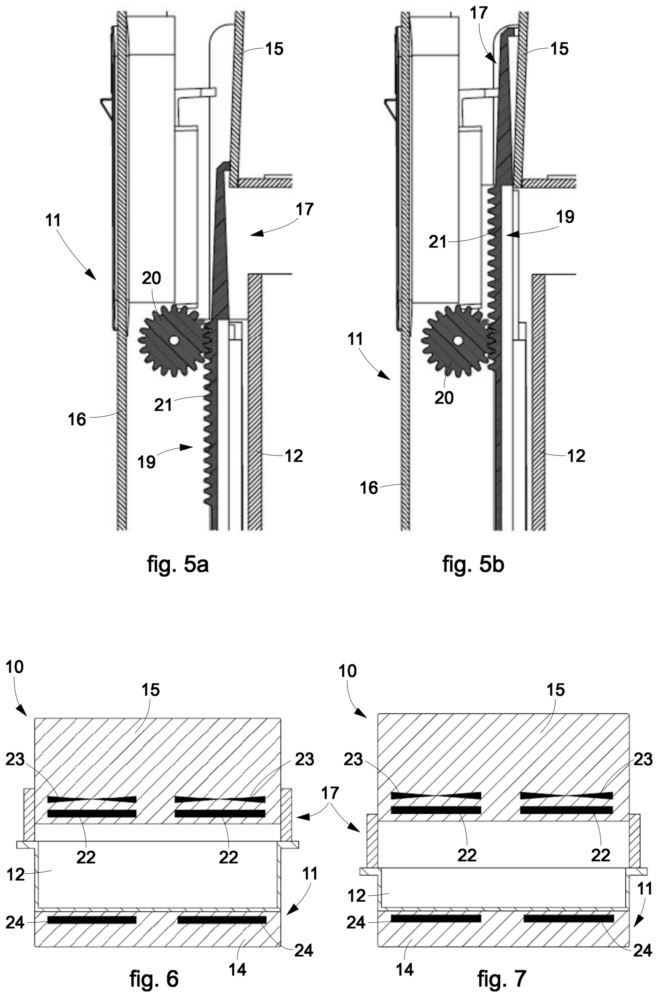

The closing portion 17 can be guided in its upward or downward motion by means of a guide device 19, for example with toothed wheels 20 and corresponding racks 21, as shown in fig. 5a and fig. 5b. These drawings only show one toothed wheel 20 and one corresponding rack 21. For example, it is possible to provide two toothed wheels 20 located in the proximity of the lateral edges of the support wall 16 that engage on corresponding racks 21. In fig. 5a, the closing portion 17 is lowered as in figs. 1 and 2, while in fig. 5b it is in a raised position, as in fig. 3. In this case, the toothed wheel 20 can be mounted rotatable on the support wall 16, while the rack is associated with the closing portion 17, but it could also be the other way around.

It is possible to provide that the guide device 19 is associated with means for automatically driving the raising or lowering of the closing portion 17, which are commanded for example by one or more keys located on the support body 11 and able to command the drive means.

The guide device 19 can also be realized in other ways, for example it can be a system with rail or trolley guides, a system with snap-in positions, a telescopic system or other gear system, an electrical, electromagnetic, hydraulic, pneumatic or other system driven by suitable drive devices associated, for example, with commands located on the support body 11, or other.

Figs. 6-9 show, by way of a non-limiting example, section views of different configurations of the cooking apparatus 10.

The cover 15 can be provided with one or more heating devices 22, for example two, which can be driven together or separately.

The heating devices 22 can be realized in the form of electrical resistors, connected to respective electric power supply devices, not shown, selectively commandable to be switched on and off, so as to regulate their temperature and consequently the temperature inside the housing space 13 and the container 12.

In addition or alternatively, heating devices 22 of the infrared type can also be provided.

The cover 15 can comprise one or more ventilation devices 23, for example two, which can be driven together or separately. The ventilation devices 23 can for example be impellers provided with multiple blades, and are equipped with corresponding drive means.

In the event there are several heating devices 22, it can be provided that these are disposed side by side, each suitable to heat a certain area of the housing space 13 and therefore of the container 12 disposed therein.

In this case, a single ventilation device 23 can be provided, able to cooperate with each of the heating devices 22, or even a plurality of ventilation devices 23, each able to cooperate with one specific heating device 23 and preferably axially aligned therewith. A single heating device 22 can also be provided, able to cooperate with two or more ventilation devices 23.

Apertures (not shown) can be provided in the cover 15 for the inlet and/or outlet of air to be circulated by means of the ventilation device(s) 23.

The base 14 can be provided with one or more heating devices 24, for example two, which can be driven together or separately. The heating devices 24 can be realized in the form of electrical resistors, connected to respective electric power supply devices, not shown, selectively commandable to be switched on and off, so as to regulate their temperature and consequently the temperature inside the housing space 13 and the container 12.

The heating devices 24 of the base 14 can be vertically aligned with the heating devices 22 of the cover 15, so as to heat specific zones of the container 12 more effectively.

Fig. 6 shows a cooking apparatus 10 having a container 12, or tub, with a greater height than the container 12 shown in fig. 7. Advantageously, in fact, the present closing portion 17 can be used to close containers 12 of different heights. In the case of fig. 6, the closing portion descends along the cover 15 by a smaller segment than the descent it travels in fig. 7. In both cases, the closing portion 17 can adhere to, or press down on, the upper edge of the container 12.

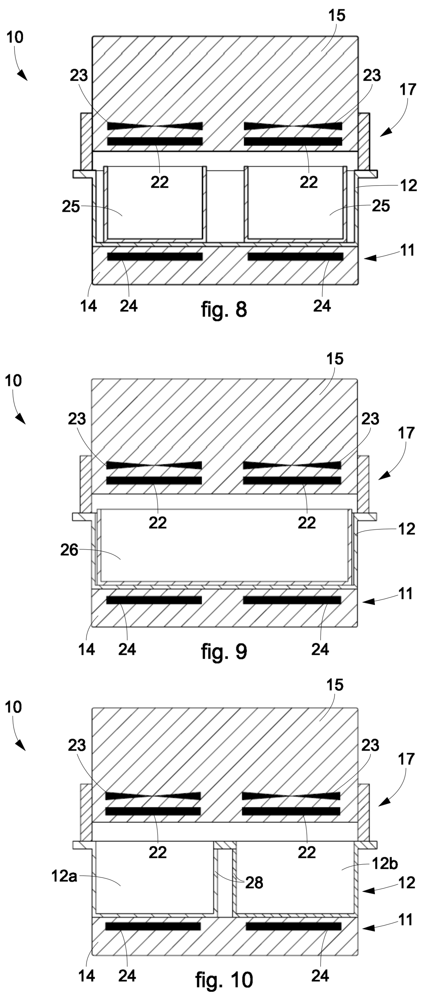

Fig. 8 shows two baskets 25 placed side by side inside the container 12. Each of the baskets 25 can be associated with a corresponding pair of aligned heating devices 22 and 24, an upper one in the cover 15 and the other, lower one, in the base 14, and with a corresponding ventilation device 23.

Fig. 9 shows the container 12 in which a basket 26 of larger sizes than the baskets 25 of fig. 8 is inserted. The basket 26 substantially occupies the entire container 12.

In accordance with some embodiments, the baskets 26 can be separate elements to be inserted and extracted in/from a respective container 12, or be integrated in a container 12.

Fig. 10 shows a container 12 divided into two parts 12a and 12b, for example of equal sizes. The parts 12a and 12b are divided by one or more walls 28, in this case a double wall. A basket can be inserted inside one or both of the parts 12a and 12b, or the parts 12a and 12b can be used directly to contain foodstuffs to be cooked. The two parts 12a and 12b therefore define as many cooking chambers.

Of course, it is possible to provide a cooking apparatus 10 provided with more than two pairs of heating devices 22 and 24, and such as to accommodate more than two baskets 25 in the container 12, or it is possible to provide containers 12 and/or baskets 25 and 26 of a different shape and/or sizes than what shown.

The base 14, provided with the one or more heating devices 24, can be used to prepare foodstuffs even without the aid of the container 12, with the cooking apparatus 10 in the conformation of fig. 5.

In this case, the foodstuffs can be positioned directly on the base, or possibly on a baking tray or a cooking plate positioned on the base 14, in particular when the latter is provided with its own heating devices 24.

The closing portion 17, as stated, can assume a plurality of closing positions above the container 12, so as to adapt to different heights thereof, and it can also provide intermediate degrees of opening if, for example, ventilation holes are provided on the cover 15 which can be closed or partly opened by means of a suitable positioning of the closing portion 17.

The container 12 can be made of transparent material, such as glass or other materials suitable for cooking.

Through this solution, the cooking chamber defined within such container 12 is totally visible on three of the four sides, therefore anywhere except for, or only partly, on the side where the support wall 16 is present. The handles 27 can also be made of transparent material. Alternatively, the handles 27 can be made of metal material. According to possible solutions, it can also be provided that the handle 12 of a container 12 with which a basket 26 is fixedly associated is defined by a handle of the basket 26 itself.

It is clear that modifications and/or additions of parts may be made to the cooking apparatus 10 as described heretofore, without thereby departing from the field and scope of the present invention, as defined by the claims.

It is also clear that, although the present invention has been described with reference to some specific examples, a person of skill in the art will be able to achieve other equivalent forms of cooking apparatus, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Cooking apparatus (10), comprising a support body (11) and at least one container (12) insertable and extractable from a housing space (13), wherein said support body (11) is provided with a support wall (16) to which a base (14) and a cover (15) are fixed, **characterized in that** an annular closing portion (17) is associated with said cover (15) slidable with respect thereto in a substantially vertical direction (V) from at least a first lowered position, in which it is able to engage on an upper edge of said at least one container (12) inserted in said housing space (13) and defining at least one cooking chamber, to at least a second raised position of extraction of said at least one container (12), or vice versa.

2. Cooking apparatus (10) according to claim 1, **characterized in that** said closing portion (17) internally has a section that tends to widen downwards and to narrow upwards, so as to slightly compress the upper edge of the container (12) in said lowered position.

3. Cooking apparatus (10) according to claim 1 or 2, **characterized in that** said closing portion (17) is associated with a guide device (19).

4. Cooking apparatus (10) according to any one of the preceding claims, **characterized in that** said support body (11) has a substantially C-like shape defined by said cover (15), said support wall (16) and said base (14) and delimiting said housing space (13) on three sides.

5. Cooking apparatus (10) according to any one of the preceding claims, **characterized in that** said container (12) is made using a transparent material, preferably glass.

6. Cooking apparatus (10) according to any one of the preceding claims, **characterized in that** said cover (15) is provided with one or more heating devices (22).

7. Cooking apparatus (10) according to any one of the preceding claims, **characterized in that** said cover (15) comprises one or more ventilation devices (23).

8. Cooking apparatus (10) according to any one of the preceding claims, **characterized in that** said base (14) is provided with one or more heating devices (24).

9. Cooking apparatus (10) according to claims 6 and 8, **characterized in that** the heating devices (24) of the base (14) are vertically aligned with the heating devices (22) of the cover (15).

10. Cooking apparatus (10) according to any one of the preceding claims, **characterized in that** two or more containers (12) are positioned in said housing space (13).

11. Cooking apparatus (10) according to any one of the preceding claims, **characterized in that** said at least one container (12) is divided into two parts (12a, 12b) separated by one or more walls (28).

12. Cooking apparatus (10) according to any one of the preceding claims, **characterized in that** one or more baskets (25, 26) are housed in said at least one container (12).
